# EUROPEAN PATENT APPLICATION

(11) **EP 3 817 300 A1**
(43) Date of publication of application: **05.05.2021**
(21) Application number: 20204058.0
(22) Date of filing: 27.10.2020
(51) Int. Cl.: H04L 12/26, H04L 12/24

(54) **FORWARDING PARAMETER OBTAINING METHOD, APPARATUS, AND SYSTEM**

(30) Priority: 28.10.2019 CN 201911033151; 23.01.2020 CN 202010076922
(71) Applicant: HUAWEI TECHNOLOGIES CO., LTD., Shenzhen, Guangdong 518129 (CN)
(72) Inventor: Li, Zhenbin, Shenzhen, Guangdong 518129 (CN); Zhou, Tianran, Shenzhen, Guangdong 518129 (CN); Liu, Min, Shenzhen, Guangdong 518129 (CN)
(74) Representative: Epping - Hermann - Fischer

(57) **Abstract**

This application provides a forwarding parameter obtaining method, apparatus, and system, and is applied to the communications field. A first forwarding device receives a first data packet sent by a second forwarding device on a forwarding path, where the first data packet includes a forwarding parameter monitoring instruction, and the forwarding path is used to forward the first data packet. The first forwarding device obtains, according to the forwarding parameter monitoring instruction, a forwarding parameter used when the first forwarding device forwards the first data packet. The first forwarding device sends the forwarding parameter to a telemetry analysis apparatus. In this application, the forwarding parameter is automatically obtained and reported, to help improve forwarding fault locating efficiency.

## Description

### TECHNICAL FIELD

This application relates to the communications field, and in particular, to a forwarding parameter obtaining method, apparatus, and system.

### BACKGROUND

Currently, in a process of forwarding a received data packet, a forwarding node may forward, based on a forwarding entry configured by a network management device, a data packet that matches the forwarding entry. Once a forwarding fault caused by a forwarding entry occurs on a forwarding node, the forwarding fault can be located only by manually obtaining forwarding parameters included in forwarding entries node by node. This is inefficient.

### SUMMARY

This application provides a forwarding parameter obtaining method, apparatus, and system, to automatically obtain a forwarding parameter.

According to a first aspect, a forwarding parameter obtaining method is provided. The method includes: A first forwarding device receives a first data packet sent by a second forwarding device on a forwarding path. The first data packet includes a forwarding parameter monitoring instruction, and the forwarding path is used to forward the first data packet. The first forwarding device obtains, according to the forwarding parameter monitoring instruction, a forwarding parameter used when the first forwarding device forwards the first data packet. The first forwarding device sends the forwarding parameter to a telemetry analysis apparatus.

In the foregoing method, the first forwarding device may obtain, according to the forwarding parameter monitoring instruction carried in the first data packet, the forwarding parameter used to forward the first data packet, and send the obtained forwarding parameter to the telemetry analysis apparatus. In this way, the forwarding parameter is automatically obtained and reported, to help improve forwarding fault locating efficiency.

In a possible implementation of the first aspect, the method further includes: The first forwarding device receives configuration information sent by a control apparatus. The configuration information is used to indicate a type of the forwarding parameter that the first forwarding device needs to collect according to the forwarding parameter monitoring instruction.

In a possible implementation of the first aspect, that the first forwarding device obtains, according to the forwarding parameter monitoring instruction, a forwarding parameter used when the first forwarding device forwards the first data packet includes: The first forwarding device obtains the forwarding parameter based on the configuration information and the forwarding parameter monitoring instruction. In this way, the first forwarding device may selectively obtain the forwarding parameter based on the configuration information and the forwarding parameter monitoring instruction, for example, obtain a forwarding parameter that may cause a forwarding fault, to help further improve forwarding fault locating efficiency while reducing a reported data volume.

In a possible implementation of the first aspect, that the first forwarding device sends the forwarding parameter to a telemetry analysis apparatus includes: The first forwarding device generates a second data packet based on the forwarding parameter and the first data packet. The second data packet includes the first data packet and the forwarding parameter. The first forwarding device sends the second data packet to a third forwarding device on the forwarding path, so that the third forwarding device sends the forwarding parameter to the telemetry analysis apparatus. In this way, the first forwarding device sends the obtained forwarding parameter in a packet-based forwarding manner, to help save a network resource between the first forwarding device and the telemetry analysis apparatus, and improve forwarding parameter reporting efficiency.

In a possible implementation of the first aspect, that the first forwarding device sends the forwarding parameter to a telemetry analysis apparatus includes: The first forwarding device sends a user datagram protocol (User Datagram Protocol, UDP) message to the telemetry analysis apparatus. The UDP message includes the forwarding parameter. In this way, the first forwarding device directly sends the forwarding parameter to the telemetry analysis apparatus without occupying a bandwidth of the forwarding path, to help relieve congestion of the forwarding path.

In a possible implementation of the first aspect, the forwarding parameter includes a first parameter set and a second parameter set, the first parameter set includes a parameter that is in a packet header of the first data packet and that is used for forwarding entry matching, and the second parameter set includes at least one of a parameter in a forwarding entry that matches a parameter included in the first parameter set, a location of the forwarding entry, and an identifier of the forwarding entry. If the forwarding entry is a forwarding information base (forwarding information base, FIB) entry, the first parameter set includes a destination internet protocol (Internet Protocol, IP) address, and the second parameter set includes at least one of a next-hop address and an outbound interface. If the forwarding entry is an access control list (access control list, ACL), the first parameter set includes an IP address range or a network segment, the IP address range or the network segment includes a source IP address of the first data packet, and the second parameter set includes "allow to pass" or "reject passing". "Allow to pass" indicates that forwarding of the first data packet is allowed. "Reject passing" indicates that forwarding of the first data packet is rejected.

According to a second aspect, a forwarding parameter obtaining method is provided. The method includes: A second forwarding device obtains indication information sent by a control apparatus. The indication information is used to indicate the second forwarding device to add a forwarding parameter monitoring instruction to a first data packet. The second forwarding device adds the forwarding parameter monitoring instruction to the first data packet based on the indication information. The second forwarding device sends, to a first forwarding device on a forwarding path used to forward the first data packet, the first data packet to which the forwarding parameter monitoring instruction is added.

In the foregoing method, as a first-hop node on the forwarding path used to forward the first data packet, the second forwarding device may add, based on the indication information sent by the control apparatus, the forwarding parameter monitoring instruction to the first data packet sent by a user, so that a forwarding device on the forwarding path can automatically obtain the forwarding parameter. The indication information may include a flow identifier and a flag bit, and the flag bit is used to identify enabling of a forwarding parameter monitoring function. The second forwarding device that obtains the indication information may determine, based on the flow identifier and the flag bit, to add the forwarding parameter monitoring instruction to the first data packet identified by the flow identifier. The flow identifier is used to identify a service flow to which the second data packet belongs, and may be, for example, a multi-tuple or a globally unique identifier used to identify the service flow.

In a possible implementation of the second aspect, the method further includes: The second forwarding device obtains type information sent by the control apparatus. The type information is used to indicate a type of a forwarding parameter that the second forwarding device needs to collect according to the forwarding parameter monitoring instruction. The second forwarding device obtains the forwarding parameter based on the type information and the forwarding parameter monitoring instruction. The second forwarding device sends the forwarding parameter to a telemetry analysis apparatus. In this way, the second forwarding device used as the first-hop node may also obtain the forwarding parameter used to forward the first data packet, so that the telemetry analysis apparatus can determine, based on the forwarding parameter sent by the second forwarding device, whether a forwarding fault occurs on the second forwarding device.

In a possible implementation of the second aspect, that the second forwarding device sends the forwarding parameter to a telemetry analysis apparatus includes: The second forwarding device sends a UDP message to the telemetry analysis apparatus. The message includes the forwarding parameter.

In a possible implementation of the second aspect, the method further includes: The second forwarding device obtains type information sent by the control apparatus. The type information is used to indicate a type of a forwarding parameter that the second forwarding device needs to collect according to the forwarding parameter monitoring instruction. The second forwarding device obtains the forwarding parameter based on the type information and the forwarding parameter monitoring instruction. The second forwarding device adds the forwarding parameter to the first data packet.

In a possible implementation of the second aspect, the forwarding parameter includes a first parameter set and a second parameter set, the first parameter set includes a parameter that is in a packet header of the first data packet and that is used for forwarding entry matching, and the second parameter set includes at least one of a parameter in a forwarding entry that matches a parameter included in the first parameter set, a location of the forwarding entry, and an identifier of the forwarding entry.

According to a third aspect, a forwarding parameter obtaining apparatus is provided. The apparatus is disposed in a first forwarding device and includes a module that can implement a function corresponding to any one of the first aspect or the possible implementations of the first aspect.

According to a fourth aspect, a forwarding parameter obtaining apparatus is provided. The apparatus is disposed in a second forwarding device and includes a module that can implement a function corresponding to any one of the second aspect or the possible implementations of the second aspect.

According to a fifth aspect, a computer-readable storage medium is provided. The computer-readable storage medium includes an instruction, and when the instruction is run on a computer, the computer is enabled to perform the forwarding parameter obtaining method in any one of the first aspect or the possible implementations of the first aspect.

According to a sixth aspect, a computer-readable storage medium is provided. The computer-readable storage medium includes an instruction, and when the instruction is run on a computer, the computer is enabled to perform the forwarding parameter obtaining method in any one of the second aspect or the possible implementations of the second aspect.

According to a seventh aspect, a computer program product including an instruction is provided. When the computer program product is run on a computer, the computer is enabled to perform the forwarding parameter obtaining method in any one of the first aspect or the possible implementations of the first aspect.

According to an eighth aspect, a computer program product including an instruction is provided. When the computer program product is run on a computer, the computer is enabled to perform the forwarding parameter obtaining method in any one of the second aspect or the possible implementations of the second aspect.

According to a ninth aspect, a forwarding parameter obtaining apparatus is provided. The apparatus includes a processor, a memory, a bus, and a communications interface. The memory is configured to store a computer executable instruction, the processor is connected to the memory by using the bus, and when the apparatus runs, the processor executes the computer executable instruction stored in the memory, so that the apparatus performs the forwarding parameter obtaining method in any one of the first aspect or the possible implementations of the first aspect. The apparatus provided in the ninth aspect may be disposed in the first forwarding device in any one of the first aspect or the possible implementations of the first aspect.

According to a tenth aspect, a forwarding parameter obtaining apparatus is provided. The apparatus includes a processor, a memory, a bus, and a communications interface. The memory is configured to store a computer executable instruction, the processor is connected to the memory by using the bus, and when the apparatus runs, the processor executes the computer executable instruction stored in the memory, so that the apparatus performs the forwarding parameter obtaining method in any one of the second aspect or the possible implementations of the second aspect. The apparatus provided in the tenth aspect may be disposed in the second forwarding device in any one of the second aspect or the possible implementations of the second aspect.

According to an eleventh aspect, a forwarding parameter obtaining system is provided. The system includes the apparatus provided in any one of the third aspect or the possible implementations of the third aspect and the apparatus provided in any one of the fourth aspect or the possible implementations of the fourth aspect. Alternatively, the system includes the apparatus provided in the ninth aspect and the apparatus provided in the tenth aspect.

In a possible implementation of the eleventh aspect, the system further includes a control apparatus. The control apparatus is configured to: send indication information to a second forwarding device, where the indication information is used to indicate the second forwarding device to add a forwarding parameter monitoring instruction to a second data packet identified by a flow identifier; and send configuration information to a first forwarding device, where the configuration information is used to indicate a type of a forwarding parameter that the first forwarding device needs to collect according to the forwarding parameter monitoring instruction.

### BRIEF DESCRIPTION OF DRAWINGS

FIG. 1 is a schematic diagram of a network scenario according to an embodiment of this application;
FIG. 2(a)-1 and FIG. 2(a)-2 are a schematic flowchart of a forwarding parameter obtaining method according to an embodiment of this application;
FIG. 2(b) is a schematic diagram of a format of a forwarding policy packet according to an embodiment of this application;
FIG. 2(c) is a schematic diagram of formats of a telemetry instruction header (telemetry instruction header, TIH) and metadata (metadata) according to an embodiment of this application;
FIG. 3 is a schematic diagram of another network scenario according to an embodiment of this application;
FIG. 4A and FIG. 4B are a schematic flowchart of another forwarding parameter obtaining method according to an embodiment of this application;
FIG. 5 is a schematic structural diagram of a forwarding parameter obtaining apparatus according to an embodiment of this application;
FIG. 6 is a schematic structural diagram of another forwarding parameter obtaining apparatus according to an embodiment of this application;
FIG. 7 is a schematic diagram of a hardware structure of a forwarding parameter obtaining apparatus according to an embodiment of this application;
FIG. 8 is a schematic diagram of a hardware structure of another forwarding parameter obtaining apparatus according to an embodiment of this application; and
FIG. 9 is a schematic diagram of a hardware structure of still another forwarding parameter obtaining apparatus according to an embodiment of this application.

### DESCRIPTION OF EMBODIMENTS

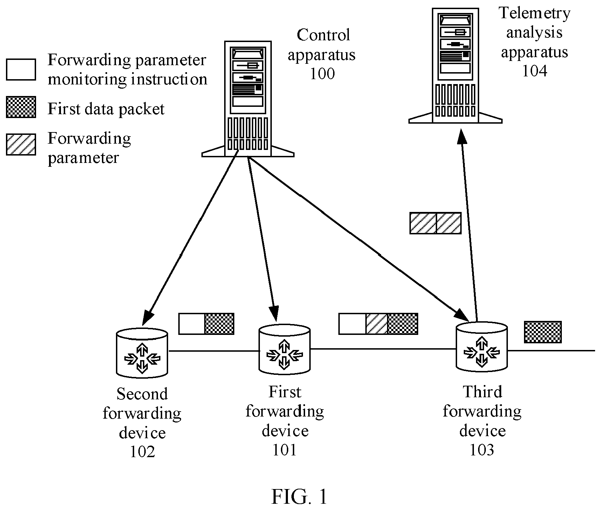

The following describes the embodiments of the present invention with reference to accompanying drawings. FIG. 1 is a schematic diagram of a network scenario according to an embodiment of this application. In the network scenario shown in FIG. 1, a first forwarding device 101, a second forwarding device 102, and a third forwarding device 103 are located on a forwarding path used to forward a user packet. The user packet may be a data packet included in a service flow from a user. The second forwarding device 102 is the first hop (initial hop) on the forwarding path used to forward the user packet. The first forwarding device 101 is a next hop of the second forwarding device 102 on the forwarding path. The third forwarding device 103 is a next hop of the first forwarding device 101 on the forwarding path. The third forwarding device 103 is the last hop on a forwarding path on which forwarding parameter monitoring needs to be performed. A last-hop device such as the third forwarding device 103 on the forwarding path on which forwarding parameter monitoring needs to be performed may communicate with a telemetry analysis apparatus 104. In an implementation, the forwarding path on which forwarding parameter monitoring needs to be performed may be a subset of the forwarding path used to forward the user packet. For example, the forwarding path used to forward the user packet further includes a fourth forwarding device (not shown in FIG. 1). The fourth forwarding device is a next hop of the third forwarding device 103 on the forwarding path used to forward the user packet. The initial hop on the forwarding path on which forwarding parameter monitoring needs to be performed is the first forwarding device 101. In another implementation, the forwarding path on which forwarding parameter monitoring needs to be performed completely overlaps the forwarding path used to forward the user packet. For example, the second forwarding device 102 is the initial hop on the forwarding path on which forwarding parameter monitoring needs to be performed, and the third forwarding device 103 is the last hop on the forwarding path used to forward the user packet. A control apparatus 100 can communicate with the first forwarding device 101, the second forwarding device 102, and the third forwarding device 103, and deliver configuration information to a forwarding device on the forwarding path on which forwarding parameter monitoring needs to be performed. The forwarding device that receives the configuration information, for example, the first forwarding device 101 or the third forwarding device 103, may determine, based on the received configuration information, a type of a forwarding parameter that needs to be obtained to forward the user packet. The telemetry analysis apparatus 104 may receive a forwarding parameter set from the last hop on the forwarding path on which forwarding parameter monitoring needs to be performed. The forwarding parameter set includes a forwarding parameter used when each-hop forwarding device on the forwarding path on which forwarding parameter monitoring needs to be performed forwards the user packet. The telemetry analysis apparatus 104 may determine, based on the obtained forwarding parameter, a forwarding behavior of each-hop forwarding device on the forwarding path on which forwarding parameter monitoring needs to be performed, to help to determine a forwarding fault. In an implementation, the telemetry analysis apparatus 104 and the control apparatus 100 may be disposed on a same physical entity device, and the telemetry analysis apparatus 104 and the control apparatus 100 are logical units on the physical entity device. In another implementation, the telemetry analysis apparatus 104 and the control apparatus 100 may be disposed on different physical entity devices. Implementations of the telemetry analysis apparatus 104 and the control apparatus 100 are not limited in this embodiment of this application. In other words, regardless of an implementation to be used, implementation of a method provided in the embodiments of this application is not affected.

In the scenario shown in FIG. 1, the control apparatus 100 may be a software-defined networking (software-defined networking, SDN) controller. A user may invoke, by using a user interface (user interface, UI) provided by a network as a service (network as a service, NaaS), the SDN controller used as the control apparatus 100, to deliver configuration information. Any forwarding device in the scenario shown in FIG. 1 may be a router provided with a network processor (network processor, NP), a programmable hardware switch provided with an application-specific integrated circuit (application-specific integrated circuit, ASIC), a routing device provided with a field programmable gate array (field programmable gate array, FPGA), or a software switch. For example, the software switch may be a fast data input/output (fast data input output, FD.io).

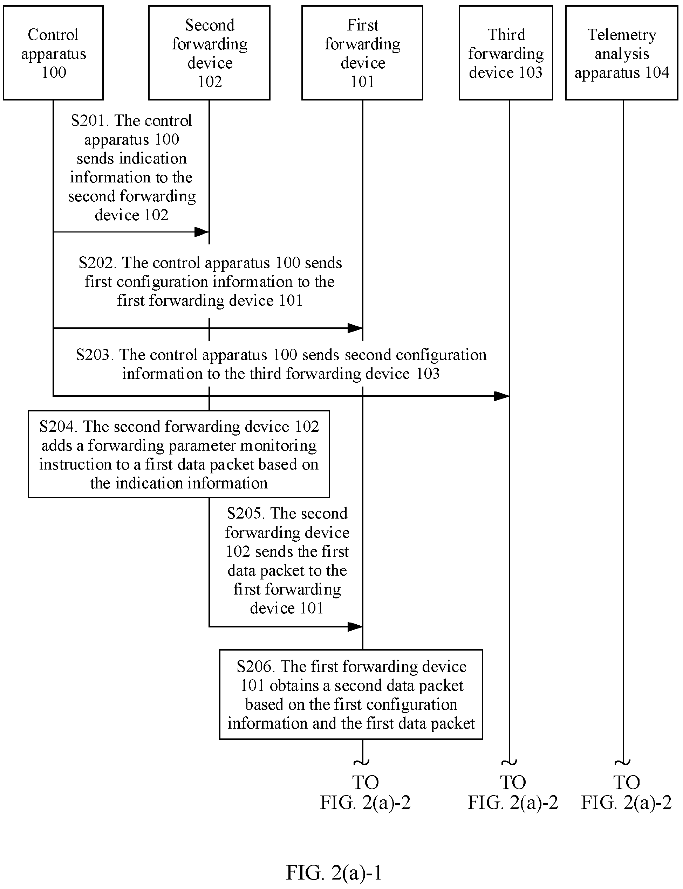

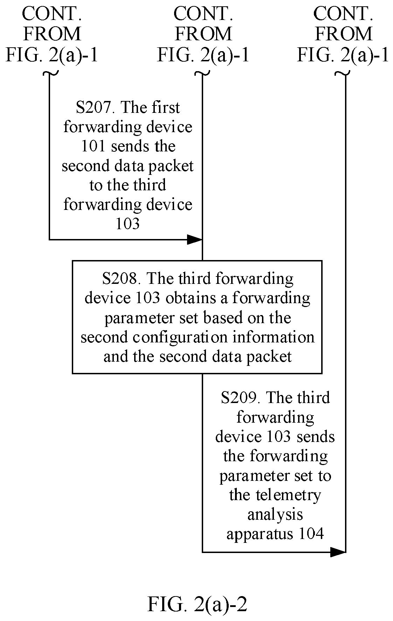

Based on the scenario shown in FIG. 1, this application provides a forwarding parameter obtaining method. FIG. 2(a)-1 and FIG. 2(a)-2 are a schematic flowchart of a forwarding parameter obtaining method according to an embodiment of this application. The method includes steps S201 to S209. With reference to FIG. 1 and FIG. 2(a)-1 and FIG. 2(a)-2, the forwarding parameter obtaining method provided in this embodiment of this application is described.

S201. A control apparatus 100 sends indication information to a second forwarding device 102.

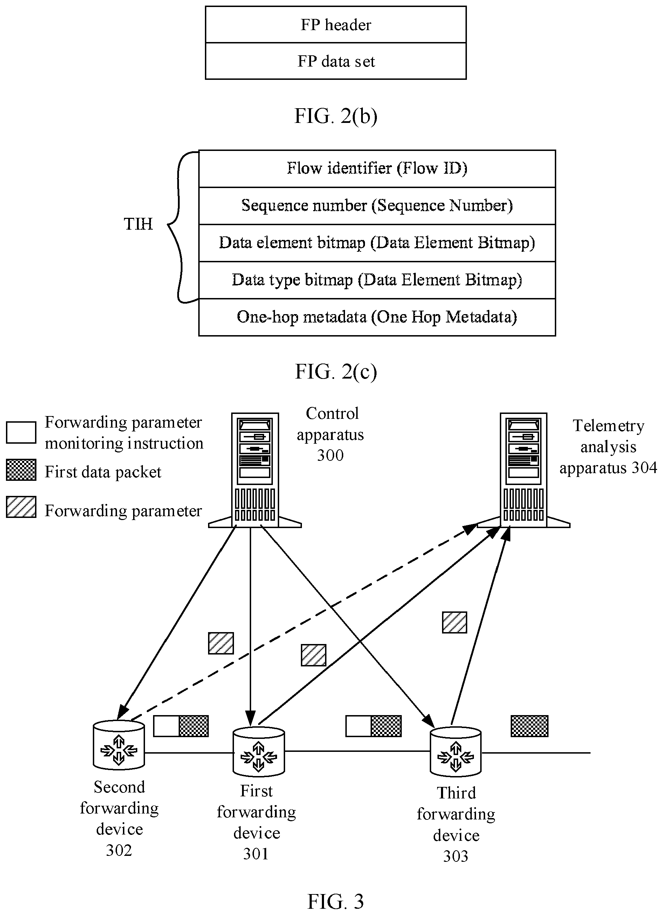

For example, the indication information is used to indicate the second forwarding device 102 to add a forwarding parameter monitoring instruction to a first data packet. The first data packet is a packet that belongs to a specified service flow. The indication information may include a flow identifier and a flag bit. The flow identifier is used to identify a service flow to which the first data packet belongs, and may be a multi-tuple or a globally unique identifier used to identify the service flow. The multi-tuple may be a 2-tuple, a 5-tuple, a 7-tuple, a 10-tuple, or the like. This is not limited in this embodiment of this application. The flag bit is used to identify enabling of a forwarding parameter monitoring function. After determining, based on the flag bit, to enable the forwarding parameter monitoring function, the second forwarding device 102 may add the forwarding parameter monitoring instruction to the first data packet that matches the flow identifier. The control apparatus 100 may carry a forwarding policy (forwarding policy, FP) packet by using an extended type-length-value (type-length-value, TLV) field of a border gateway protocol (Border Gateway Protocol, BGP) message, an interior gateway protocol (Interior Gateway Protocol, IGP) message, or a network configuration protocol (Network Configuration Protocol, Netconf) message. For a format of the FP packet, refer to FIG. 2(b). In FIG. 2(b), the FP packet includes an FP header and an FP dataset. An information element (information element) included in the FP header is used to indicate that the indication information is carried. The FP dataset is used to carry the indication information.

Optionally, if the second forwarding device 102 is the first hop on a forwarding path on which forwarding parameter monitoring needs to be performed, the control apparatus 100 may further send type information to the second forwarding device 102. The type information is used to indicate a type of a forwarding parameter that the second forwarding device 102 needs to collect according to the forwarding parameter monitoring instruction. The type of the forwarding parameter is used to indicate a forwarding action to be performed by a forwarding device. The type of the forwarding parameter may include FIB, ACL, multiprotocol label switching (Multiprotocol Label Switching, MPLS), pseudo wire (pseudo wire, PW), or segment routing (segment routing, SR). The type of the forwarding parameter is not limited in this embodiment of this application. In the FP packet shown in FIG. 2(b), another information element included in the FP header is used to indicate that the type information is carried. The FP dataset is further used to carry the type information.

S202. The control apparatus 100 sends first configuration information to a first forwarding device 101.

For example, the first configuration information is used to indicate a type of a forwarding parameter that the first forwarding device 101 needs to collect according to the forwarding parameter monitoring instruction. For content of the type of the forwarding parameter that the first forwarding device 101 needs to collect, refer to related content in S201. The first configuration information delivered by the control apparatus 100 may be the same as or different from the type information in S201. This is not limited in this embodiment of this application. The control apparatus 100 may also carry the first configuration information by using the BGP message, the IGP message, or the Netconf message. For a delivery manner of the first configuration information, refer to the delivery manner of the type information in S201.

S203. The control apparatus 100 sends second configuration information to a third forwarding device 103.

For example, the second configuration information is used to indicate a type of a forwarding parameter that the third forwarding device 103 needs to collect according to the forwarding parameter monitoring instruction. For content of the type of the forwarding parameter that the third forwarding device 103 needs to collect, refer to related content in S201. The second configuration information delivered by the control apparatus 100 may be the same as or different from the type information in S201. This is not limited in this embodiment of this application. The control apparatus 100 may also carry the second configuration information by using the BGP message, the IGP message, or the Netconf message. For a delivery manner of the second configuration information, refer to the delivery manner of the type information in S201.

S204. The second forwarding device 102 adds the forwarding parameter monitoring instruction to the first data packet based on the indication information.

For example, the forwarding parameter monitoring instruction is used to instruct a forwarding device that receives the forwarding monitoring instruction to enable the forwarding parameter monitoring function. The forwarding parameter monitoring function is to obtain a forwarding parameter used to forward a data packet. Optionally, the second forwarding device 102 adds a telemetry instruction header (telemetry instruction header, TIH) and metadata to the first data packet. The TIH may be used to carry the forwarding parameter monitoring instruction. For example, a data type bitmap included in the TIH may be used to carry the forwarding parameter monitoring instruction. The metadata may be used to carry the forwarding parameter obtained by the forwarding device.

S205. The second forwarding device 102 sends, to the first forwarding device 101, the first data packet to which the forwarding parameter monitoring instruction is added.

Optionally, if the second forwarding device 102 obtains the type information from the control apparatus 100, before sending the first data packet to the first forwarding device 101, the second forwarding device 102 collects the forwarding parameter based on the forwarding parameter monitoring instruction and the type information. The forwarding parameter collected by the second forwarding device 102 includes a first parameter set and a second parameter set. The first parameter set includes a parameter that is in a packet header of the first data packet and that is used for forwarding entry matching. The second parameter set includes at least one of a parameter in a forwarding entry that matches a parameter included in the first parameter set, a location of the forwarding entry, and an identifier of the forwarding entry. If the second forwarding device 102 determines, based on the type information, that a type of the forwarding parameter is FIB, the forwarding entry is a FIB entry. Correspondingly, the first parameter set includes a destination internet protocol (Internet Protocol, IP) address, and the second parameter set includes at least one of a next-hop address and an outbound interface. If the second forwarding device 102 determines, based on the type information, that a type of the forwarding parameter is ACL, the forwarding entry is an ACL entry. Correspondingly, the first parameter set includes an IP address range or a network segment, and the second parameter set includes "allow to pass" or "reject passing". The IP address range or the network segment includes a source IP address of the first data packet. "Allow to pass" indicates that forwarding of the first data packet is allowed. "Reject passing" indicates that forwarding of the first data packet is rejected. If the second forwarding device 102 determines, based on the type information, that a type of the forwarding parameter is MPLS, the forwarding entry is an MPLS entry. Correspondingly, the first parameter set includes an MPLS label allocated to the second forwarding device 102, and the second parameter set includes an MPLS label allocated to the first forwarding device 101 (a next hop) and an outbound interface of the second forwarding device 102.

Optionally, the second parameter set may further include an index between entries. For example, if the second forwarding device 102 determines, based on the type information, that a type of the forwarding parameter is ACL, the forwarding entry is an ACL entry. Correspondingly, the first parameter set includes an IP address range or a network segment, and the second parameter set includes "allow to pass" and a first entry index. The first entry index is used to link to an FIB entry. In this case, the first parameter set further includes a destination IP address, and the second parameter set further includes at least one of a next-hop address and an outbound interface. If the second forwarding device 102 determines, based on the type information, that a type of the forwarding parameter is ACL, the forwarding entry is an ACL entry. Correspondingly, the first parameter set includes an IP address range or a network segment, and the second parameter set includes "allow to pass" and a second entry index. The second entry index is used to link to an MPLS entry. In this case, the first parameter set further includes an MPLS label allocated to the second forwarding device 102, and the second parameter set further includes an MPLS label allocated to the first forwarding device 101 (a next hop) and an outbound interface of the second forwarding device 102. Correspondingly, the second forwarding device 102 may add the obtained forwarding parameter to a one-hop metadata field in FIG. 2(c), and send the obtained forwarding parameter to the next-hop first forwarding device 101 together with the first data packet.

In the scenario shown in FIG. 2, the second forwarding device 102 may further include a forward performance monitoring (forward performance monitoring, FPM) agent (agent). The FPM agent included in the second forwarding device 102 may parse the received indication information, and determine to enable the forwarding parameter monitoring function. Optionally, the FPM agent included in the second forwarding device 102 may determine the type of the forwarding parameter based on the type information. The FPM agent included in the second forwarding device 102 may trigger, based on the type of the forwarding parameter and forwarding components included in the second forwarding device 102, a forwarding component that matches the type of the forwarding parameter to obtain the parameter used to forward the first data packet. In a case of a component level, the FPM agent may trigger a corresponding forwarding component to obtain the forwarding parameter. For example, if the type of the forwarding parameter is ACL, the FPM agent may trigger a photo framer to obtain one or more of a source IP address and a destination IP address that are carried in the packet header of the first data packet. In a case of a module level, the FPM agent may trigger a module included in the corresponding forwarding component to obtain the forwarding parameter. For example, if the type of the forwarding parameter is ACL and FIB, the FPM agent may trigger an NP to search for an ACL entry and an FIB entry based on the one or more of the source IP address and the destination IP address that are obtained by the photo framer, and obtain parameters included in the ACL entry and the FIB entry that match the one or more of the source IP address and the destination IP address. The FPM agent may classify the obtained parameters based on the meanings of the first parameter set and the second parameter set, to obtain the forwarding parameter used when the second forwarding device 102 forwards the first data packet.

S206. The first forwarding device 101 obtains a second data packet based on the first configuration information and the first data packet.

For example, that the first forwarding device 101 obtains a second data packet based on the first configuration information and the first data packet includes: The first forwarding device 101 receives the first data packet sent by the second forwarding device 102. The first data packet includes the forwarding parameter monitoring instruction. The first forwarding device 101 obtains, based on the forwarding parameter monitoring instruction and the first configuration information, the forwarding parameter used when the first forwarding device 101 forwards the first data packet. The first forwarding device 101 adds the forwarding parameter obtained by the first forwarding device 101 to the first data packet, to obtain the second data packet. The first forwarding device 101 may add the forwarding parameter obtained by the first forwarding device 101 to the one-hop metadata field in FIG. 2(c), to obtain the second data packet.

In the scenario shown in FIG. 2, the first forwarding device 101 may include an FPM agent. The FPM agent included in the first forwarding device 101 may parse the received first configuration information, to determine a type of a forwarding parameter that needs to be monitored. The FPM agent included in the first forwarding device 101 may parse the forwarding parameter monitoring instruction carried in the data type bitmap in FIG. 2(c), to enable the forwarding parameter monitoring function. The FPM agent included in the first forwarding device 101 may trigger, based on the determined type of the forwarding parameter and forwarding components included in the first forwarding device 101, a forwarding component that matches the type of the forwarding parameter to obtain the forwarding parameter used to forward the first data packet. For a manner in which the FPM agent included in the first forwarding device 101 obtains the forwarding parameter, refer to the manner in which the FPM agent included in the second forwarding device 102 obtains the forwarding parameter.

S207. The first forwarding device 101 sends the second data packet to the third forwarding device 103.

S208. The third forwarding device 103 obtains a forwarding parameter set based on the second configuration information and the second data packet.

For example, for a method in which the third forwarding device 103 obtains, based on the second configuration information, a forwarding parameter used to forward the second data packet (forwarding the second data packet amounts to forwarding the first data packet), refer to the method in which the first forwarding device 101 obtains the forwarding parameter used to forward the first data packet. The third forwarding device 103 may use, as the forwarding parameter set, the forwarding parameter used by the third forwarding device 103 and the forwarding parameter obtained from the second data packet. The third forwarding device 103 may obtain, from the one-hop metadata in FIG. 2(c), the forwarding parameter used when the first forwarding device 101 forwards the first data packet. Optionally, the third forwarding device 103 may further obtain, from the one-hop metadata in FIG. 2(c), the forwarding parameter used when the second forwarding device 102 forwards the first data packet.

In the scenario shown in FIG. 2, the third forwarding device 103 may include an FPM agent. The FPM agent included in the third forwarding device 103 may parse the received second configuration information, to determine a type of a forwarding parameter that needs to be monitored. The FPM agent included in the third forwarding device 103 may parse the forwarding parameter monitoring instruction carried in the data type bitmap in FIG. 2(c), to enable the forwarding parameter monitoring function. The FPM agent included in the third forwarding device 103 may trigger, based on the determined type of the forwarding parameter and forwarding components included in the third forwarding device 103, a forwarding component that matches the type of the forwarding parameter to obtain the parameter used to forward the second data packet. For a manner in which the FPM agent included in the third forwarding device 103 obtains the forwarding parameter, refer to the manner in which the FPM agent included in the first forwarding device 101 obtains the forwarding parameter.

S209. The third forwarding device 103 sends the forwarding parameter set to a telemetry analysis apparatus 104. For example, the third forwarding device 103 may send, to the telemetry analysis apparatus 104, the FP data set that is of the FP packet shown in FIG. 2(b) and that includes the forwarding parameter set obtained in S208, so that the telemetry analysis apparatus 104 can obtain the forwarding parameter set.

In the method provided in this embodiment of this application, a forwarding device such as the first forwarding device 101 or the third forwarding device 103 on the forwarding path on which forwarding parameter monitoring needs to be performed can automatically obtain a forwarding parameter used to forward a data packet (the first data packet), add the automatically obtained forwarding parameter to the data packet, and send, in a channel-associated manner, the data packet to a forwarding device that reports the forwarding parameter, for example, the third forwarding device 103, to help improve forwarding fault analysis and locating efficiency.

FIG. 3 is a schematic diagram of another network scenario according to an embodiment of this application. A difference between the network scenario shown in FIG. 3 and the scenario shown in FIG. 1 lies in that any forwarding device in the scenario shown in FIG. 3 can communicate with a telemetry analysis apparatus 304. For functions of the first forwarding device 301, the second forwarding device 302, the third forwarding device 303, and the control device 300 in the network scenario shown in FIG. 3, refer to related descriptions of the network scenario shown in FIG. 1.

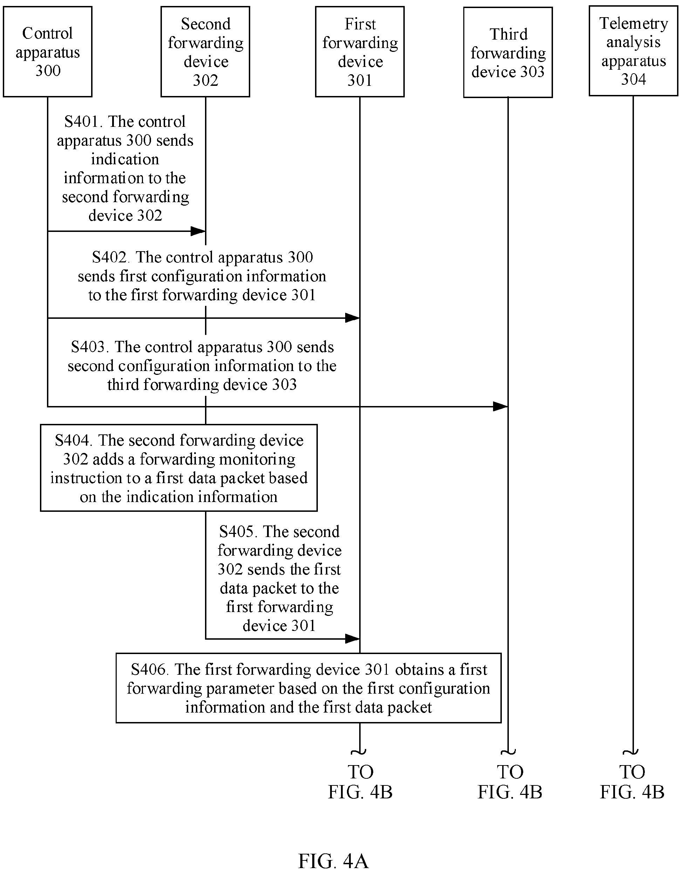

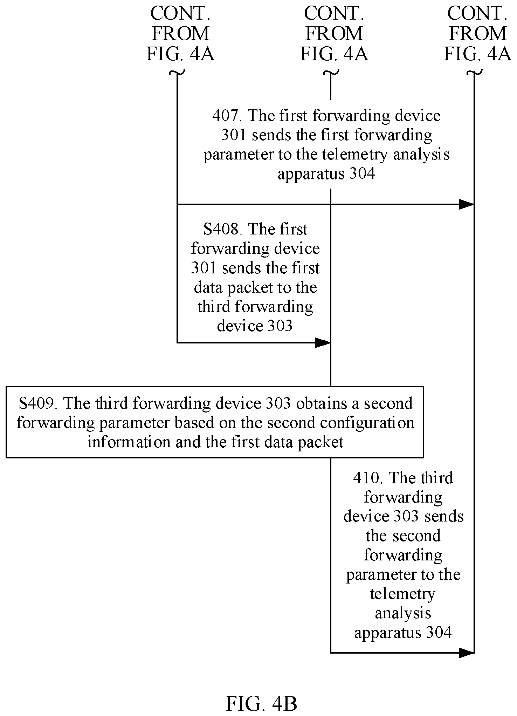

FIG. 4A and FIG. 4B are a schematic flowchart of another forwarding parameter obtaining method according to an embodiment of this application. With reference to FIG. 3 and FIG. 4A and FIG. 4B, the another forwarding parameter obtaining method provided in this embodiment of this application is described.

S401. A control apparatus 300 sends indication information to a second forwarding device 302.

For S401, refer to corresponding content in S201.

S402. The control apparatus 300 sends first configuration information to a first forwarding device 301.

For S402, refer to corresponding content in S202.

S403. The control apparatus 300 sends second configuration information to a third forwarding device 303.

For S403, refer to corresponding content in S203.

S404. The second forwarding device 302 adds the forwarding parameter monitoring instruction to the first data packet based on the indication information.

For S404, refer to corresponding content in S204.

Optionally, the second forwarding device 302 may send, to a telemetry analysis apparatus 304 by using the method in which the third forwarding device 103 sends the forwarding parameter set to the telemetry analysis apparatus 104 in S209, the forwarding parameter used when the second forwarding device 302 forwards the first data packet. S405. The second forwarding device 302 sends, to the first forwarding device 301, the first data packet to which the forwarding parameter monitoring instruction is added.

For S405, refer to corresponding content in S205. In this embodiment of this application, the second forwarding device 302 does not need to add, to the first data packet, the forwarding parameter used when the second forwarding device 302 forwards the first data packet, but directly communicates with the telemetry analysis apparatus 304 to report the forwarding parameter.

S406. The first forwarding device 301 obtains a first forwarding parameter based on the first configuration information and the first data packet.

The first forwarding parameter includes a forwarding parameter that is used to forward the first data packet and that is obtained by the first forwarding device 301 based on the first configuration information and the forwarding parameter monitoring instruction included in the first data packet. For a specific method, refer to the method in which the first forwarding device 101 obtains the forwarding parameter used when the first forwarding device 101 forwards the first data packet in S206.

S407. The first forwarding device 301 sends the first forwarding parameter to the telemetry analysis apparatus 304. For S407, refer to the method in which the third forwarding device 103 sends the forwarding parameter set to the telemetry analysis apparatus 104 in S209.

S408. The first forwarding device 301 sends the first data packet to the third forwarding device 303.

For S408, refer to the method in which the first forwarding device 101 sends the second data packet to the third forwarding device 103 in S207.

S409. The third forwarding device 303 obtains a second forwarding parameter based on the second configuration information and the first data packet.

The second forwarding parameter includes a forwarding parameter that is used to forward the first data packet and that is obtained by the third forwarding device 303 based on the second configuration information and the forwarding parameter monitoring instruction included in the first data packet. For a method, refer to the method in which the third forwarding device 103 obtains the forwarding parameter used when the third forwarding device 103 forwards the first data packet in S208.

S410. The third forwarding device 303 sends the second forwarding parameter to the telemetry analysis apparatus 304.

For S410, refer to the method in which the third forwarding device 103 sends the forwarding parameter set to the telemetry analysis apparatus 104 in S209.

In the method provided in this embodiment of this application, a forwarding device such as the first forwarding device 301 or the third forwarding device 303 on the forwarding path on which forwarding parameter monitoring needs to be performed can automatically obtain a forwarding parameter used to forward a data packet (the first data packet), and directly send the automatically obtained forwarding parameter to the telemetry analysis apparatus 304, to help improve forwarding fault analysis and locating efficiency.

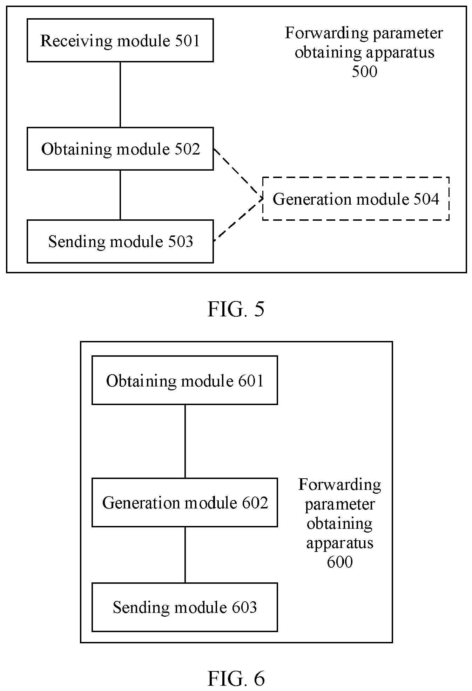

FIG. 5 is a schematic structural diagram of a forwarding parameter obtaining apparatus according to an embodiment of this application. The apparatus 500 shown in FIG. 5 may be disposed in the first forwarding device 101 in the embodiment corresponding to FIG. 2 or the first forwarding device 301 in the embodiment corresponding to FIG. 4A and FIG. 4B. The apparatus 500 includes a receiving module 501, an obtaining module 502, and a sending module 503. The receiving module 501 is configured to receive a first data packet sent by a second forwarding device on a forwarding path. The first data packet includes a forwarding parameter monitoring instruction, and the forwarding path is used to forward the first data packet. The obtaining module 502 is configured to obtain, according to the forwarding parameter monitoring instruction, a forwarding parameter used when the first forwarding device forwards the first data packet. The sending module 503 is configured to send the forwarding parameter to a telemetry analysis apparatus. The receiving module 501 is configured to support the apparatus 500 in performing the action performed by the first forwarding device 101 in S205 in FIG. 2, or configured to support the apparatus 500 in performing the action performed by the first forwarding device 301 in S405 in FIG. 4A and FIG. 4B. The obtaining module 502 is configured to support the apparatus 500 in performing the action performed by the first forwarding device 101 in S206 in FIG. 2, or configured to support the apparatus 500 in performing the action performed by the first forwarding device 301 in S406 in FIG. 4A and FIG. 4B.

In an implementation, the receiving module 501 is further configured to receive configuration information sent by a control apparatus. The configuration information is used to indicate a type of the forwarding parameter that the first forwarding device needs to collect according to the forwarding parameter monitoring instruction. Correspondingly, the obtaining module 502 is configured to obtain the forwarding parameter based on the configuration information received by the receiving module 501 and the forwarding parameter monitoring instruction. The receiving module 501 is configured to support the apparatus 500 in performing the action performed by the first forwarding device 101 in S202 in FIG. 2, or configured to support the apparatus 500 in performing the action performed by the first forwarding device 301 in S402 in FIG. 4A and FIG. 4B.

In an implementation, the apparatus 500 further includes a generation module 504. The generation module 504 is configured to generate a second data packet based on the forwarding parameter and the first data packet. The second data packet includes the first data packet and the forwarding parameter. Correspondingly, the sending module 503 is configured to send the second data packet to a third forwarding device on the forwarding path, so that the third forwarding device sends the forwarding parameter to the telemetry analysis apparatus. The generation module 504 is configured to support the apparatus 500 in performing the action performed by the first forwarding device 101 in S206 in FIG. 2. The sending module 503 is configured to support the apparatus 500 in performing the action performed by the first forwarding device 101 in S207 in FIG. 2.

In an implementation, the sending module 503 is configured to send a user datagram protocol UDP message to the telemetry analysis apparatus. The UDP message includes the forwarding parameter. The sending module 503 is configured to support the apparatus 500 in performing the action performed by the first forwarding device 301 in S407 in FIG. 4A and FIG. 4B.

For example, the forwarding parameter includes a first parameter set and a second parameter set, the first parameter set includes a parameter that is in a packet header of the first data packet and that is used for forwarding entry matching, and the second parameter set includes at least one of a parameter in a forwarding entry that matches a parameter included in the first parameter set, a location of the forwarding entry, and an identifier of the forwarding entry.

FIG. 6 is a schematic structural diagram of another forwarding parameter obtaining apparatus according to an embodiment of this application. The apparatus 600 shown in FIG. 6 may be disposed in the second forwarding device 102 in the embodiment corresponding to FIG. 2 or the second forwarding device 302 in the embodiment corresponding to FIG. 4A and FIG. 4B. The apparatus 600 includes an obtaining module 601, a generation module 602, and a sending module 603. The obtaining module 601 is configured to obtain indication information sent by a control apparatus. The indication information is used to indicate the second forwarding device to add a forwarding parameter monitoring instruction to a first data packet. The generation module 602 is configured to add the forwarding parameter monitoring instruction to the first data packet based on the indication information. The first data packet includes the forwarding parameter monitoring instruction. The sending module 603 is configured to send the first data packet to a first forwarding device on a forwarding path used to forward the first data packet. The obtaining module 601 is configured to support the apparatus 600 in performing the action performed by the second forwarding device 102 in S201 in FIG. 2, or configured to support the apparatus 600 in performing the action performed by the second forwarding device 302 in S401 in FIG. 4A and FIG. 4B. The generation module 602 is configured to support the apparatus 600 in performing the action performed by the second forwarding device 102 in S204 in FIG. 2, or configured to support the apparatus 600 in performing the action performed by the second forwarding device 302 in S404 in FIG. 4A and FIG. 4B. The sending module 603 is configured to support the apparatus 600 in performing the action performed by the second forwarding device 102 in S205 in FIG. 2, or configured to support the apparatus 600 in performing the action performed by the second forwarding device 302 in S405 in FIG. 4A and FIG. 4B.

In an implementation, the obtaining module 601 is further configured to obtain type information sent by the control apparatus. The type information is used to indicate a type of a forwarding parameter that the second forwarding device needs to collect according to the forwarding parameter monitoring instruction. The obtaining module 601 is further configured to obtain the forwarding parameter based on the type information and the forwarding parameter monitoring instruction. The sending module 603 is further configured to send the forwarding parameter to a telemetry analysis apparatus.

In an implementation, the sending module 603 is further configured to send a UDP message to the telemetry analysis apparatus. The UDP message includes the forwarding parameter.

In an implementation, the obtaining module 601 is further configured to obtain type information sent by the control apparatus. The type information is used to indicate a type of a forwarding parameter that the second forwarding device needs to collect according to the forwarding parameter monitoring instruction. The obtaining module 601 is further configured to obtain the forwarding parameter based on the type information and the forwarding parameter monitoring instruction. The generation module 602 is further configured to add the forwarding parameter to the first data packet.

An embodiment of this application further provides a communications apparatus. The control apparatus includes a sending unit. The sending unit is configured to: send indication information to a second forwarding device, where the indication information is used to indicate the second forwarding device to add a forwarding parameter monitoring instruction to a second data packet identified by a flow identifier; and send configuration information to a first forwarding device, where the configuration information is used to indicate a type of a forwarding parameter that the first forwarding device needs to collect according to the forwarding parameter monitoring instruction.

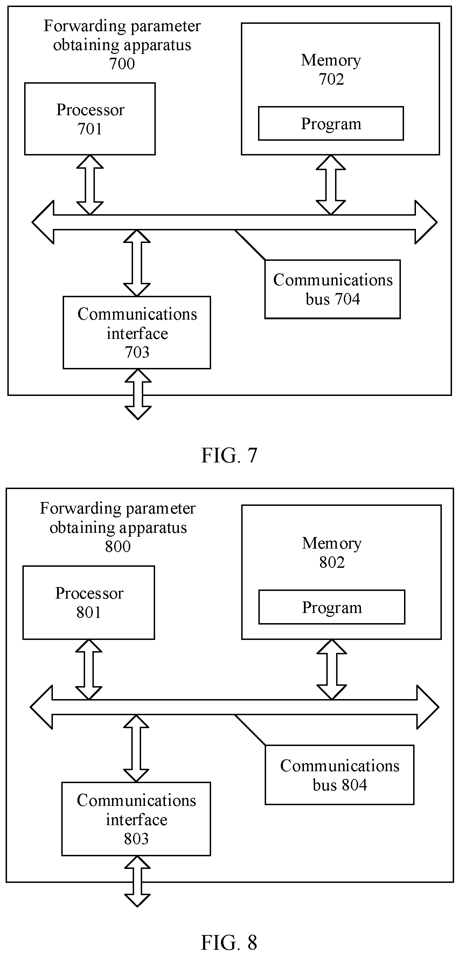

FIG. 7 is a schematic diagram of a hardware structure of a forwarding parameter obtaining apparatus according to an embodiment of this application. The apparatus 700 provided in the embodiment corresponding to FIG. 7 may be the apparatus 500 provided in the embodiment corresponding to FIG. 5. The apparatus 700 provided in the embodiment corresponding to FIG. 7 is described from a perspective of a hardware structure. The apparatus 700 provided in the embodiment corresponding to FIG. 7 may implement the function of the first forwarding device 101 in the embodiment corresponding to FIG. 2 or the function of the first forwarding device 301 in the embodiment corresponding to FIG. 4A and FIG. 4B. The apparatus 700 provided in the embodiment corresponding to FIG. 7 includes a processor 701, a memory 702, a communications bus 704, and a communications interface 703. The processor 701, the memory 702, and the communications interface 703 are connected by using the communications bus 704. The memory 702 is configured to store a program. The processor 701 performs, based on an executable instruction included in the program read from the memory 702, the method performed by the first forwarding device 101 in the embodiment corresponding to FIG. 2 or the method performed by the first forwarding device 301 in the embodiment corresponding to FIG. 4A and FIG. 4B. The processor 701 may communicate with a second forwarding device and a control apparatus by using the communications interface 703.

The communications interface 703 is configured to support the apparatus 700 in performing the method performed by the first forwarding device 101 in S202, S205, and S207 in FIG. 2, or configured to support the apparatus 700 in performing the method performed by the first forwarding device 301 in S402, S405, and S407 in FIG. 4A and FIG. 4B. The processor 701 is configured to support the apparatus 700 in performing the method performed by the first forwarding device 101 in S206 in FIG. 2, or configured to support the apparatus 700 in performing the method performed by the first forwarding device 301 in S406 in FIG. 4A and FIG. 4B. In addition to storing program code and data, the memory 702 is further configured to cache first configuration information obtained from the control apparatus.

FIG. 8 is a schematic diagram of a hardware structure of a forwarding parameter obtaining apparatus according to an embodiment of this application. The apparatus 800 provided in the embodiment corresponding to FIG. 8 may be the apparatus 600 provided in the embodiment corresponding to FIG. 6. The apparatus 800 provided in the embodiment corresponding to FIG. 8 is described from a perspective of a hardware structure. The apparatus 800 provided in the embodiment corresponding to FIG. 8 may implement the function of the second forwarding device 102 in the embodiment corresponding to FIG. 2 or the function of the second forwarding device 302 in the embodiment corresponding to FIG. 4A and FIG. 4B. The apparatus 800 provided in the embodiment corresponding to FIG. 8 includes a processor 801, a memory 802, a communications bus 804, and a communications interface 803. The processor 801, the memory 802, and the communications interface 803 are connected by using the communications bus 804. The memory 802 is configured to store a program. The processor 801 performs, based on an executable instruction included in the program read from the memory 802, the method performed by the second forwarding device 102 in the embodiment corresponding to FIG. 2 or the method performed by the second forwarding device 302 in the embodiment corresponding to FIG. 4A and FIG. 4B. The processor 801 may communicate with a first forwarding device and a control apparatus by using the communications interface 803.

The communications interface 803 is configured to support the apparatus 800 in performing the method performed by the second forwarding device 102 in S201 and S205 in FIG. 2, or configured to support the apparatus 800 in performing the method performed by the second forwarding device 302 in S401 and S405 in FIG. 4A and FIG. 4B. The processor 801 is configured to support the apparatus 800 in performing the method performed by the second forwarding device 102 in S204 in FIG. 2, or configured to support the apparatus 800 in performing the method performed by the second forwarding device 302 in S404 in FIG. 4A and FIG. 4B. In addition to storing program code and data, the memory 802 is further configured to cache indication information obtained from the control apparatus.

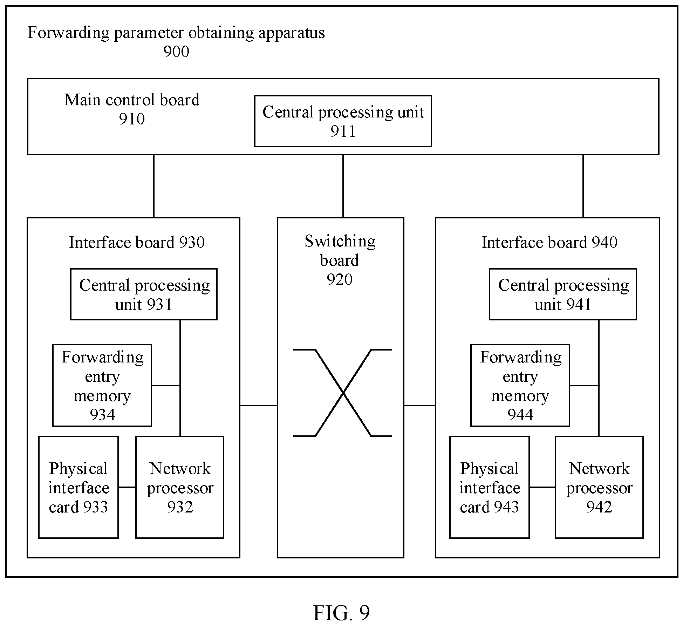

FIG. 9 is a schematic diagram of a hardware structure of another forwarding parameter obtaining apparatus according to an embodiment of this application. The apparatus 900 shown in FIG. 9 may be the apparatus 500 provided in the embodiment corresponding to FIG. 5 or the apparatus 700 provided in the embodiment corresponding to FIG. 7. As shown in FIG. 9, the apparatus 900 includes a main control board 910, an interface board 930, a switching board 920, and an interface board 940. The main control board 910, the interface board 930, the interface board 940, and the switching board 920 are connected to a system backplane by using a system bus, to implement interworking. The main control board 910 is configured to complete functions such as system management, device maintenance, and protocol processing. The switching board 920 is configured to complete data exchange between interface boards (the interface board is also referred to as a line card or a service board). The interface board 930 and the interface board 940 are configured to: provide various service interfaces (for example, a POS interface, a GE interface, and an ATM interface), and forward a data packet.

The interface board 930 may include a central processing unit 931, a forwarding entry memory 934, a physical interface card 933, and a network processor 932. The central processing unit 931 is configured to: control and manage the interface board, and communicate with a central processing unit 911 on the main control board. The forwarding entry memory 934 is configured to store a forwarding entry. The physical interface card 933 is configured to receive and send traffic. The network memory 932 is configured to control, based on the forwarding entry, the physical interface card 933 to receive and send traffic.

Specifically, the physical interface card 933 is configured to: receive a first data packet sent by a second forwarding device, and send a first data packet to a third forwarding device; and/or configured to exchange information with a control apparatus.

After receiving the first data packet, the physical interface card 933 sends the first data packet to the central processing unit 911 by using the central processing unit 931, and the central processing unit 911 processes the first data packet. The central processing unit 911 is configured to obtain, based on configuration information delivered by the control apparatus and the first data packet, a forwarding parameter used to forward the first data packet. The central processing unit 931 is further configured to control the network memory 932 to obtain the forwarding entry in the forwarding entry memory 934. In addition, the central processing unit 931 is further configured to control the network memory 932 to receive and send traffic by using the physical interface card 933.

It should be understood that operations on the interface board 940 are the same as the operations on the interface board 930 in this embodiment of the present invention. For brevity, details are not described again.

In addition, it should be noted that there may be one or more main control boards. When there are a plurality of main control boards, a primary main control board and a secondary main control board may be included. There may be one or more interface boards, and a first network device having a stronger data processing capability provides more interface boards. There may also be one or more physical interface cards on the interface board. There may be no switching board, or there may be one or more switching boards. When there are a plurality of switching boards, load sharing and redundancy backup may be implemented together. In a centralized forwarding architecture, the first network device may need no switching board, and the interface board provides a function of processing service data of an entire system. In a distributed forwarding architecture, the first network device may have at least one switching board, and data exchange between a plurality of interface boards is implemented by using the switching board, to provide a large-capacity data exchange and processing capability. Therefore, a data access and processing capability of the first network device in the distributed architecture is better than that of the first network device in the centralized architecture. A specific architecture to be used depends on a specific networking deployment scenario. This is not limited herein.

An embodiment of this application further provides a forwarding parameter obtaining system. The system includes the forwarding parameter obtaining apparatus provided in the embodiment corresponding to FIG. 5, FIG. 7, or FIG. 9, and the forwarding parameter obtaining apparatus provided in the embodiment corresponding to FIG. 6 or FIG. 8. For functions of the apparatus included in the system, refer to the foregoing corresponding content. Details are not described herein again.

A general-purpose processor mentioned in the embodiments of this application may be a microprocessor, or the processor may be any conventional processor. The steps of the methods disclosed with reference to the embodiments of the present invention may be directly performed by a combination of hardware and software modules in the processor. When software is used for implementation, code that implements the foregoing functions may be stored in a computer-readable medium. The computer-readable medium includes a computer storage medium. The storage medium may be any available medium accessible to a computer. By way of an example instead of a limitation, the computer-readable medium may be a random-access memory (random-access memory, RAM), a read-only memory (read-only memory, ROM), an electrically erasable programmable read-only memory (electrically erasable programmable read-only memory, EEPROM), a compact disc read-only memory (compact disc read-only memory, CD-ROM) or another optical disk storage, a disk storage medium or another disk storage, or any other medium that can be used to carry or store expected program code in a form of an instruction or a data structure and can be accessed by a computer. The computer-readable medium may be a compact disc (compact disc, CD), a laser disc, a digital video disc (digital video disc, DVD), a floppy disk, or a Blu-ray disc.

The embodiments in this specification are all described in a progressive manner. Fr same or similar parts in the embodiments, refer to these embodiments. Each embodiment focuses on a difference from other embodiments. Especially, a system embodiment is basically similar to a method embodiment, and therefore is described briefly. For related parts, refer to partial descriptions in the method embodiment.

## Claims

1. A forwarding parameter obtaining method, comprising:
receiving, by a first forwarding device, a first data packet sent by a second forwarding device on a forwarding path, wherein the first data packet comprises a forwarding parameter monitoring instruction, and the forwarding path is used to forward the first data packet;
obtaining, by the first forwarding device according to the forwarding parameter monitoring instruction, a forwarding parameter used when the first forwarding device forwards the first data packet; and
sending, by the first forwarding device, the forwarding parameter to a telemetry analysis apparatus.

2. The method according to claim 1, further comprising:
receiving, by the first forwarding device, configuration information sent by a control apparatus, wherein the configuration information is used to indicate a type of the forwarding parameter that the first forwarding device needs to collect according to the forwarding parameter monitoring instruction.

3. The method according to claim 2, wherein the obtaining, by the first forwarding device according to the forwarding parameter monitoring instruction, a forwarding parameter used when the first forwarding device forwards the first data packet comprises:
obtaining, by the first forwarding device, the forwarding parameter based on the configuration information and the forwarding parameter monitoring instruction.

4. The method according to any one of claims 1 to 3, wherein the sending, by the first forwarding device, the forwarding parameter to a telemetry analysis apparatus comprises:
generating, by the first forwarding device, a second data packet based on the forwarding parameter and the first data packet, wherein the second data packet comprises the first data packet and the forwarding parameter; and
sending, by the first forwarding device, the second data packet to a third forwarding device on the forwarding path, so that the third forwarding device sends the forwarding parameter to the telemetry analysis apparatus.

5. The method according to any one of claims 1 to 3, wherein the sending, by the first forwarding device, the forwarding parameter to a telemetry analysis apparatus comprises:
sending, by the first forwarding device, a user datagram protocol, UDP, message to the telemetry analysis apparatus, wherein the UDP message comprises the forwarding parameter.

6. A forwarding parameter obtaining method, wherein the method comprises:
obtaining, by a second forwarding device, indication information sent by a control apparatus, wherein the indication information is used to indicate the second forwarding device to add a forwarding parameter monitoring instruction to a first data packet;
adding, by the second forwarding device, the forwarding parameter monitoring instruction to the first data packet based on the indication information; and
sending, by the second forwarding device to a first forwarding device on a forwarding path used to forward the first data packet, the first data packet to which the forwarding parameter monitoring instruction is added.

7. The method according to claim 6, wherein the method further comprises:
obtaining, by the second forwarding device, type information sent by the control apparatus, wherein the type information is used to indicate a type of a forwarding parameter that the second forwarding device needs to collect according to the forwarding parameter monitoring instruction;
obtaining, by the second forwarding device, the forwarding parameter based on the type information and the forwarding parameter monitoring instruction; and
sending, by the second forwarding device, the forwarding parameter to a telemetry analysis apparatus.

8. The method according to claim 7, wherein the sending, by the second forwarding device, the forwarding parameter to a telemetry analysis apparatus comprises:
sending, by the second forwarding device, a user datagram protocol, UDP, message to the telemetry analysis apparatus, wherein the UDP message comprises the forwarding parameter.

9. The method according to claim 6, wherein the method further comprises:
obtaining, by the second forwarding device, type information sent by the control apparatus, wherein the type information is used to indicate a type of a forwarding parameter that the second forwarding device needs to collect according to the forwarding parameter monitoring instruction;
obtaining, by the second forwarding device, the forwarding parameter based on the type information and the forwarding parameter monitoring instruction; and
adding, by the second forwarding device, the forwarding parameter to the first data packet.

10. A forwarding parameter obtaining apparatus, wherein the apparatus is disposed in a first forwarding device and comprises:
a receiving module, configured to receive a first data packet sent by a second forwarding device on a forwarding path, wherein the first data packet comprises a forwarding parameter monitoring instruction, and the forwarding path is used to forward the first data packet;
an obtaining module, configured to obtain, according to the forwarding parameter monitoring instruction, a forwarding parameter used when the first forwarding device forwards the first data packet; and
a sending module, configured to send the forwarding parameter to a telemetry analysis apparatus.

11. The apparatus according to claim 10, wherein
the receiving module is further configured to receive configuration information sent by a control apparatus, wherein the configuration information is used to indicate a type of the forwarding parameter that the first forwarding device needs to collect according to the forwarding parameter monitoring instruction.

12. The apparatus according to claim 11, wherein
the obtaining module is configured to obtain the forwarding parameter based on the configuration information received by the receiving module and the forwarding parameter monitoring instruction.

13. The apparatus according to any one of claims 10 to 12, wherein the apparatus further comprises a generation module, wherein
the generation module is configured to generate a second data packet based on the forwarding parameter and the first data packet, wherein the second data packet comprises the first data packet and the forwarding parameter; and
the sending module is configured to send the second data packet to a third forwarding device on the forwarding path, so that the third forwarding device sends the forwarding parameter to the telemetry analysis apparatus.

14. The apparatus according to claim 11 or 12, wherein
the sending module is configured to send a user datagram protocol, UDP, message to the telemetry analysis apparatus, wherein the UDP message comprises the forwarding parameter.

15. A forwarding parameter obtaining apparatus, wherein the apparatus is disposed in a second forwarding device and comprises:
an obtaining module, configured to obtain indication information sent by a control apparatus, wherein the indication information is used to indicate the second forwarding device to add a forwarding parameter monitoring instruction to a first data packet;
a generation module, configured to add the forwarding parameter monitoring instruction to the first data packet based on the indication information, wherein the first data packet comprises the forwarding parameter monitoring instruction; and
a sending module, configured to send the first data packet to a first forwarding device on a forwarding path used to forward the first data packet.

16. The apparatus according to claim 15, wherein
the obtaining module is further configured to obtain type information sent by the control apparatus, wherein the type information is used to indicate a type of a forwarding parameter that the second forwarding device needs to collect according to the forwarding parameter monitoring instruction;
the obtaining module is further configured to obtain the forwarding parameter based on the type information and the forwarding parameter monitoring instruction; and
the sending module is further configured to send the forwarding parameter to a telemetry analysis apparatus.

17. The apparatus according to claim 15wherein
the sending module is configured to send a user datagram protocol, UDP, message to the telemetry analysis apparatus, wherein the UDP message comprises the forwarding parameter.

18. The apparatus according to claim 15, wherein
the obtaining module is further configured to obtain type information sent by the control apparatus, wherein the type information is used to indicate a type of a forwarding parameter that the second forwarding device needs to collect according to the forwarding parameter monitoring instruction;
the obtaining module is further configured to obtain the forwarding parameter based on the type information and the forwarding parameter monitoring instruction; and
the generation module is further configured to add the forwarding parameter to the first data packet.

19. A forwarding parameter obtaining system, wherein the system comprises the apparatus according to any one of claims 11 to 14 and the apparatus according to any one of claims 15 to 18.
